(19) Europäisches Patentamt
European Patent Office
Office européen des brevets

(11) Publication number: **0 031 666**
**B1**

(12) **EUROPEAN PATENT SPECIFICATION**

(45) Date of publication of patent specification: **29.08.84**

(51) Int. Cl.$^3$: **C 01 B 17/50**

(21) Application number: **80304521.0**

(22) Date of filing: **15.12.80**

(54) **Process for the manufacture of sulfur dioxide.**

(30) Priority: **21.12.79 US 106253**
**26.09.80 US 188240**

(43) Date of publication of application:
**08.07.81 Bulletin 81/27**

(45) Publication of the grant of the patent:
**29.08.84 Bulletin 84/35**

(84) Designated Contracting States:
**BE DE FR GB IT NL SE**

(56) References cited:
**CH-A- 477 364**
**DE-C- 551 686**
**US-A-2 813 007**

(73) Proprietor: **E.I. DU PONT DE NEMOURS AND COMPANY**
**1007 Market Street**
**Wilmington Delaware 19898 (US)**

(72) Inventor: **Burrus, Harry Otto**
**130 Marcella Drive**
**Webster Farms Wilmington Delaware 19803 (US)**

(74) Representative: **Woodcraft, David Charles et al**
**BROOKES & MARTIN High Holborn House 52/54**
**High Holborn**
**London, WC1V 6SE (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 031 666 B1**

## Description

The invention relates to an improved process for the manufacture of sulfur dioxide ($SO_2$).

The reaction between sulfur and sulfur trioxide ($SO_3$) to make $SO_2$ is known in the art. For example, U.S. Patent 2,813,007 describes a process for making $SO_2$ by reacting molten sulfur with an excess of sulfur trioxide. In the process described in this U.S. Patent the reaction is conducted under such conditions that a portion of the $SO_3$ is maintained in the liquid phase and $SO_2$ is released as a gas. The crude $SO_2$ is then rectified and fractionated under reflux conditions in a two column system to produce the $SO_2$ product.

Swiss Patent No. 477364 describes a sulfur dioxide production method in which molten sulfur is poured into a body of oluem. The sulfur is formed into small spheres of solid which then react with the surrounding $SO_3$. This process is conducted at relatively low reaction temperatures e.g. 40—50°C, the patent specification stating that an increase in temperature in fact achieves no real increase in reaction rate. The product purity achieved is only 99.95% with the result that in general the product requires refining before commercial use.

According to the invention, there is provided a process for preparing $SO_2$, the process comprising (a) continuously adding substantially stoichiometric amounts of liquid sulfur and liquid $SO_3$ to a reaction medium which is oleum containing 10—65% by weight of $SO_3$ and which is held at a temperature of 100—150°C, and (b) continuously withdrawing the product $SO_2$ from the reaction zone and then rectifying it in a column counter-current to a reflex stream at a reflux ratio of 0.5—2 at a temperature of 35—110°C and a pressure of 70—500 psig (about 480 to 3450 kPA).

The use of oleum as the reaction medium gives several advantages. One is that higher reaction temperatures can be employed, and this gives a higher rate of reaction and permits a reduction in reactor size. The process also can be conducted under low pressures i.e., the process can be operated at the autogenous pressure of the $SO_2$ in the condenser in the recovery section of the process. These lower pressures make it easier to recover and purify the $SO_2$ product. The process of the invention also avoids the problem of having a recycle of $S_2O_3$ and the need for equipment associated with such a recycle. A recycle is a feature of many of the prior art processes and ultimately it necessitates an undesirable release of $SO_2$ to the atmosphere.

The Figure is a flow chart of the process of the invention. The process will now be described with reference to the Figure.

The raw materials for the process are sulfur trioxide and sulfur. The $SO_3$ will be fed to the process as a liquid and will normally be at ambient temperature. In some cases the $SO_3$ may contain a stabilizer to prevent it from polymerizing into solid form.

The sulfur will be fed to the reaction in the molten state, e.g., at a temperature of 125—145°C, and can contain the usual impurities associated with commercially available sulfur.

The $SO_3$ and sulfur are fed into a reactor which is heated by suitable means. In the Figure the reactor illustrated has a steam jacket into which steam is fed to control the temperature of the reaction. The reactor has suitable means for agitation to insure mixing of the reactants.

The reaction takes place in a heel of oleum. By oleum is meant sulfuric acid containing 10—65%. The oleum may, for example, contain from 10% to 45% by weight of sulfur trioxide. Preferably, the sulfur trioxide content is 15—40%, even more preferably 20—30% by weight of sulfur trioxide. This heel acts as a medium for the reaction and produces the advantages previously set forth.

Initially the reactor should be filled with sufficient oleum to initiate the reaction. In operation, the $SO_3$ and sulfur are fed into the heel at a rate such that the volume of the reaction mass remains about constant. The feed is also regulated such that the sulfur and $SO_3$ are fed into the oleum in about stoichiometric amounts.

The oleum is maintained at a temperature of 100—150°C and preferably at 120—150°C. The reactor and a condenser are maintained at the autogenous pressure of the $SO_2$ gas produced by the reaction, *i.e.,* within the range of 183—3447 kPa gauge (70—500 psig), preferably 522—1724 kPa (80—250 psig). The pressure can be maintained at the desired level by adjusting the flow of cooling water to the condenser in the purification portion of the process.

Under these conditions the desired reaction to produce $SO_2$ takes place. This reaction is illustrated by the following equations:

The overall reaction is:

$$S + 2SO_3 \xrightarrow{H_2SO_4} 3SO_2$$

This reaction occurs in two steps as illustrated by the following

This reaction occurs in two steps as illustrated by the following

(i) $$S + SO_3 \longrightarrow S_2O_3$$

(ii) $$S_2O_3 + SO_3 \xrightarrow{\Delta} 3SO_2$$

The heat added to the oleum enables the reaction of step (ii) to take place.

The reaction creates a crude $SO_2$ gas stream which contains some $SO_3$, and this stream is withdrawn from the top of the reactor. A purge of sulfonated hydrocarbons produced from the

organic impurities in the sulfur can be taken from the bottom of the reactor to prevent their buildup.

The crude $SO_2$ is fed into a rectification column, which can be part of the reactor or separate, as illustrated. The purpose of the column is to remove the $SO_3$ present in the crude $SO_2$. Normally, a column packed with ceramic saddles will be used to provide the desired intimate mixing necessary. Within the column the crude gaseous $SO_2$ is fed counter-current to a liquid reflux stream. The contact between the two streams will take place at 35—110°C, preferably 45—80°C, and under the autogenous pressure of the $SO_2$, *i.e.*, 483—3447 kPa (gauge). This contact can reduce the $SO_3$ content of the $SO_2$ gas stream to a very small amount, *e.g.*, less than 1 ppm. The liquid stream from the bottom of the column, containing $SO_2$—$SO_3$, will be fed back to the reactor. If desired, liquid $SO_3$ can be fed into the bottom of the rectification column. This $SO_3$ prevents carryover of sulfur from the reactor into the packing of the column.

The purified $SO_2$ gas is taken off at the top of the column and fed to a condenser. In this condenser, the $SO_2$ is condensed to a liquid by indirect contact with cooling water. The liquid $SO_2$ is then drawn off as a product, with a portion being fed to the column as reflux. The reflux ratio will range from 0.5—2.

One of the advantages of the process of the invention is that the rectification procedure produces a commercially acceptable grade of $SO_2$ without the need for further purification steps, *i.e.*, the $SO_2$ product from the rectification need not be sent to a fractionation column.

The process of the invention will now be illustrated by the following example:

Into a reactor having a holdup of 95 liters is fed 181.4 kg of 20% oleum to form a heel. The reactor is heated to 150°C by a steam jacket and is pressurized to 1380 kPa (200 psig). Into the reactor is fed 113.4 kg/hour of liquid $SO_3$ and 22.7 kg/hour of molten sulfur at 140°C. The reaction mass is agitated at the rate of 6.5 HP/3785 liters.

The gaseous $SO_2$ produced is fed to a column packed with 305 cm of ceramic "Intalox" saddles. The column is operated at 72°C and 1380 kPa (200 psig), and has a reflux ratio of 0.7. The gaseous $SO_2$ taken from the column is condensed, part is refluxed and the rest removed as product.

## Claims

1. A process for preparing $SO_2$, the process comprising (a) continuously adding substantially stoichiometric amounts of liquid sulfur and liquid $SO_3$ to a reaction medium which is oleum containing 10—65% by weight of $SO_3$ and which is held at a temperature of 100—150°C, and (b) continuously withdrawing the product $SO_2$ from the reaction zone and then rectifying it in a column, counter-current to a reflux stream at a reflux ratio of 0.5—2, at a temperature of 35—110°C and a pressure of 70—500 psig (about 480 to 3450 kPa).

2. A process according to claim 1 wherein the oleum contains 10 to 45% sulfur trioxide.

3. A process according to claim 1 wherein the oleum contains 15 to 40% by weight of sulfur trioxide.

4. A process according to claim 1 or claim 2, wherein the oleum contains 20 to 30% by weight of sulfur trioxide.

## Revendications

1. Un procédé de préparation de $SO_2$, qui comprend

(a) l'addition en continu de quantités substantiellement stoechiométrique de soufre liquide et de $SO_3$ liquide à un mileau de réaction qui est de l'oléum contenant 10—65 % en poids de $SO_3$ et qui est maintenu à une température de 100—150°C, et

(b) l'enlèvement en continu du produit $SO_2$ à partir de la zone de réaction, puis sa rectification dans une colonne, à contre-courant relativement à un courant de reflux à un rapport de reflux de 0,5—2, à une température de 35—110°C et à une pression de 480 à 3450 kPa.

2. Un procédé selon la revendication 1, dans lequel l'oléum contient 10 à 45 % d'anhydride sulfurique.

3. Un procédé selon la revendication 1, dans lequel l'oléum contient 14 à 40 % en poids d'anhydride sulfurique.

4. Un procédé selon la revendication 1 ou 2, dans lequel l'oléum contient 20 à 30 % en poids d'anhydride sulfurique.

## Patentansprüche

1. Verfahren zur Herstellung von $SO_2$, wobei

(a) zu einem Reaktionsmedium, welches Oleum mit 10—65 Gew.% $SO_3$ ist und auf einer Temperatur von 100—150°C gehalten wird, kontinuierlich im wesentlichen stöchiometrische Mengen von flüssigem Schwefel und flüssigem $SO_3$ zugesetzt werden, und

(b) das als Produkt gebildete $SO_2$ aus der Reaktionszone kontinuierlich abgezogen und dann in einer Kolonne im Gegenstrom zu einem Rückflussstrom bei einem Rücklaufverhältnis von 0,5—2, einer Temperatur von 35—110°C und einem Druck von 70—500 psig (etwa 480—3450 kPa) kontinuierlich abgezogen wird.

2. Verfahren nach Anspruch 1, wobei das Oleum 10 bis 45 % Schwefeltrioxid enthält.

3. Verfahren nach Anspruch 1, wobei das Oleum 15 bis 40 Gew.% Schwefeltrioxid enthält.

4. Verfahren nach Anspruch 1 oder 2, wobei das Oleum 20 bis 30 Gew.% Schwefeltrioxid enthält.

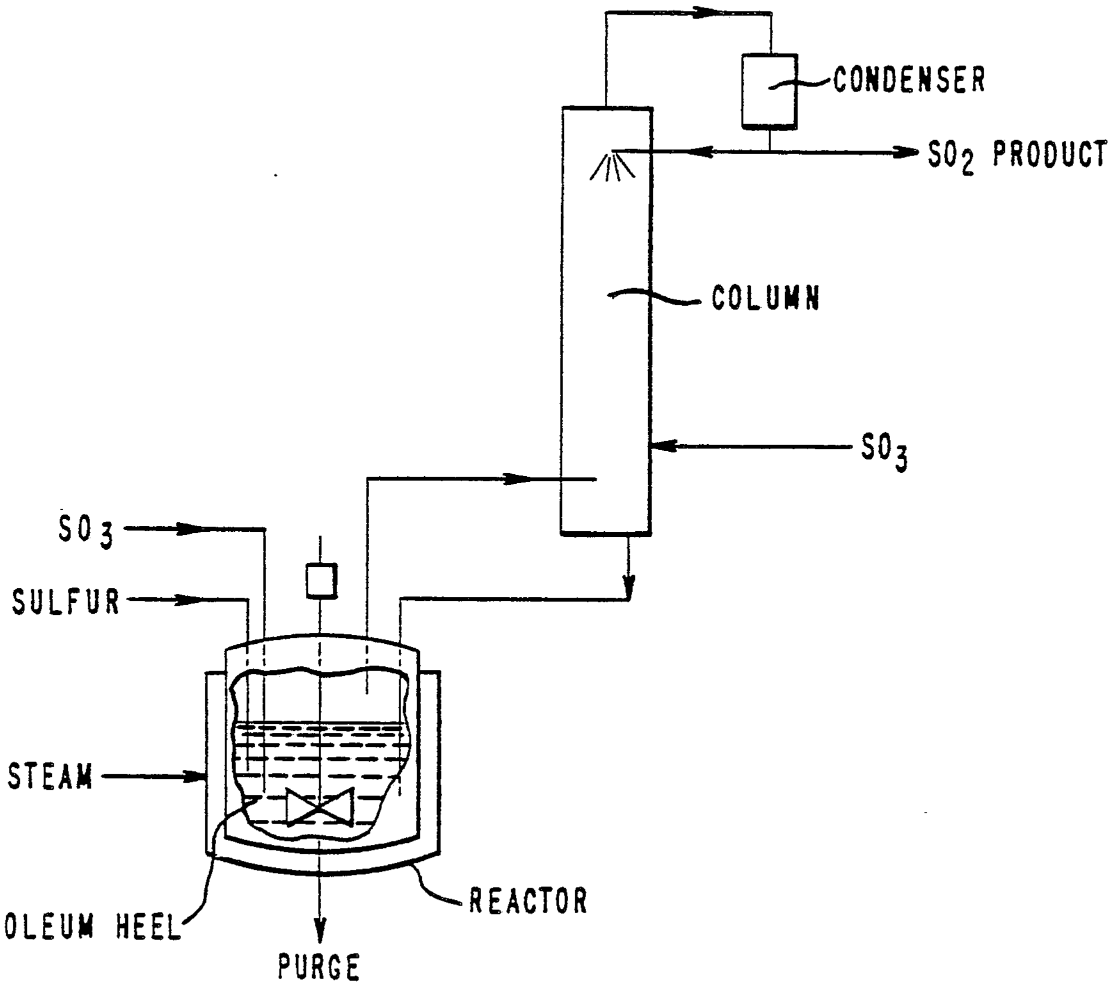
CONDENSER
$SO_2$ PRODUCT
COLUMN
$SO_3$
$SO_3$
SULFUR
STEAM
OLEUM HEEL
PURGE
REACTOR